# EUROPEAN PATENT SPECIFICATION

(11) **EP 2 195 228 B1**
(45) Date of publication and mention of the grant of the patent: **19.06.2013**
(21) Application number: 08805453.1
(22) Date of filing: 24.09.2008
(51) Int. Cl.: B62D 55/30

(54) **ARRANGEMENT IN A FORESTRY MACHINE AND A FORESTRY MACHINE**
ANORDNUNG IN EINER FORSTMASCHINE UND FORSTMASCHINE
AGENCEMENT DANS UN ENGIN FORESTIER ET ENGIN FORESTIER

(30) Priority: 25.09.2007 FI 20075668
(43) Date of publication of application: 16.06.2010
(73) Proprietor: Ponsse OYJ, 74200 Vieremä (FI)
(72) Inventor: KELPPE, Jouko, FI-74200 Vieremä (FI); VIDGRÉN, Risto, FI-74120 Iisalmi (FI)
(74) Representative: Helke, Kimmo Kalervo
(86) International application number: PCT/FI2008/050531
(87) International publication number: WO 2009/040472

(56) References cited:
- EP-A1- 1 486 405
- FR-A1- 2 530 213
- GB-A- 2 221 662
- GB-A- 2 221 662
- GB-A- 2 435 866
- GB-A- 2 435 866
- US-A- 3 696 878
- US-A- 3 744 857
- US-A- 4 671 774
- US-A- 6 149 474
- US-A1- 2001 025 732

## Description

The present invention relates to an arrangement in a forestry machine, in which there are front and rear units and bogie wheels mounted on set of swing axles, as well as a crawler mat running around the bogie wheels and an auxiliary wheel outside the set of swing axles, and in which the auxiliary wheel is essentially permanently mounted in bearings in the front and/or rear unit, so that, when the set of swing axles turns, the tension of the crawler mat is maintained by means of flexible elements connected to its perimeter. The invention also relates to a forestry machine using the arrangement.

An example of such prior art is disclosed by patent GB2221662.

In a conventional forestry machine, there are front and rear units pivoted relative to each other. The steering of a machine of this type is usually implemented as so-called articulated steering, in which case steering operating devices, such as hydraulic cylinders, are fitted between the aforementioned units pivoted to each other, in order to provide the power needed as required to set the units at an angle to each other. Which unit is usually referred to as the front unit can vary according to the application, but in this connection it can be agreed that the front unit will be the unit located closest to the cab of the forestry machine, from which is controlled the primary power source located at it, which is used to produce the power required to move and steer the forestry machine and the work devices in it. Such work devices are represented by a loader and a grab attached to it. The forestry machine thus described is particularly an, as such, known loader tractor. The other main type of forestry machine is a harvester, by means of which other kinds of timber harvesting are performed, such a felling, stripping, measuring, and cutting trees. A harvester can be implemented using a chassis structure that largely corresponds to that of a loader tractor, though on the other hand different kinds of construction are also known. However, nearly without exception two units pivoted to each other are to be found in all kinds of forestry machine. In addition, numerous different types of forestry machine, which are not separately described here, are also known.

As timber must be harvested increasingly from forests on ground with a poor load-bearing capacity, such as bogs and other peat-rich areas, it will be seen that an attempt must be made to minimize the surface pressure imposed by the machine on the ground. Various kinds of implement and devices are known, which can travel on poorly supporting ground, for example, with the aid of wide and long crawler mats. In the case of forestry machines, attempts have been made to increase bearing capacity in light machines with the aid of various kinds of crawler mats. In the case of heavier machines, particularly loader tractors, a low surface pressure has been aimed at mainly by one or more of the machine's two-wheeled axles being replaced with a set of so-called swing axles, so that a four-wheeled machine, for example, can be converted into a six or eight-wheeled machine. In loader tractors, the set of axles under the load space are typically bogie axles. It is also known to use in connection with the said type of swing-axle crawler tracks, i.e. crawler mats, which are arranged to rotate around the wheels of the bogie axles and thus create a large load-bearing contact surface area against the ground. One such crawler solution is disclosed in patent publication FI822636A.

However, the relative benefit provided by crawler mats remains small, particularly on ground with a reasonably good bearing capacity, which is the case in the majority of felling sites. Besides, the crawler-mat construction wears easily and is expensive to maintain. Similarly, the effectiveness of the complicated crawler-mat construction may be poor in terms of power use, compared to a simple wheel, or even a swing bogie. The use of a crawler mat and nonskid devices also protects the tyre on stony and difficult ground.

A crawler track rotating around the bogie wheels fitted in connection with bogie axles will not, however, in all conditions be able to provide a sufficiently low surface pressure.

Finnish patent 78428 discloses a crawler-mat arrangement for bogie vehicle. Such bogie vehicles can include forestry machines, which are both vehicles, especially harvesters, equipped with a timber-harvester device, such as a harvester head, and vehicles, especially loader tractors, equipped with a load space. Adequate tension in the crawler mat will improve its operation. Complicated tensioning devices are often associated with, as such, known crawler mats.

In proper tracked vehicles, the crawler mat is typically carried on several wheels, or sets of wheels, but these cannot be considered in this case, instead a search must now be made for a simple conversion arrangement for placing a crawler mat around the bogie wheels of a set of swing axles, with the aid of a suitable additional wheel (or additional wheels). In other words, the intention is to find a solution for equipping an as such known loader tractor with simple additional equipment, so that it can operate effectively on ground with a substantially lower bearing capacity. Publication US 3744857 discloses a crawler-mat arrangement built around bogie wheels and an auxiliary sprocket acting as a drive sprocket. Thus, the crawler mat rotates around two freely rotating pneumatic tyres and a special drive sprocket, which sprocket is set clearly higher than the bogie axle. The bogie axles have longitudinal play, which is pressurized, for example, pneumatically. This allows the set of bogie axles to swing, which is its intention. The bogie axles can also be locked, in which case the pneumatic tyres will flex to permit the bogie to turn. However, it is obvious that the pneumatic tyres on the bogie axles of, for example, a heavy forestry vehicle will not be able to flex sufficiently, if the fact that they should also simultaneously carry a considerably large load is also taken into account. The pneumatic tyres dimensioned for a full load require a pressure of at least 4 - 5 bar in the case of a typical forestry machine tyre, in which case the tyre will not have the flexibility required for the free rotation of a set of bogie axles.

The present invention is intended to create an improved crawler mat arrangement and a forestry machine using it, which is simpler than previously. The characteristic features of the arrangement according to the invention are stated in Claim 1. Correspondingly, the characteristic features of the forestry machine according to the invention are stated in Claim 14. According to one embodiment of the invention, the flexibility of the auxiliary wheel is achieved in such a way that it is a pneumatic tyre, in which a lower pressure than in the bogie wheels can now be used.

According to one embodiment, the auxiliary wheel is essentially the same kind of pneumatic tyre as the bogie wheels, but preferably with a smaller diameter. When examined on a flat base, the auxiliary wheel is preferably only slightly higher than the bogie wheels of the set of bogie axles, thus ensuring the full rotatability of the set of bogie axles and the entire forestry machine in normal conditions, however. In other words, when moving on a flat, hard surface, the length in contact with the ground is essentially equally as great as in the case of a track running around conventional set of bogie axles and the crawler track rotating the bogie wheels of the set of bogie axles. As the size of the auxiliary wheel is about 80 - 90 % of that of a bogie wheel, the upper surfaces of all three wheels lie on essentially the same level when the set of bogie axles is straight.

In one embodiment, the auxiliary wheel is detachably attached, for example, to a sub-chassis like an additional bunk, i.e. a sliding bunk, the attachment arms of which are pushed into the muff of the rear unit. In this embodiment, the actual additional bunk is not necessarily needed, but can be easily added, if the timber being transported requires it. It should be noted that a muff arrangement of this kind is very common nowadays.

The auxiliary wheel can also be arranged with transmission, in a manner that is as such known, to increase the traction created by the bogie wheels. In some situations, as the magnitude of the friction of the inner surface of the bogie is limited, this may be necessary, if the force transmitted to the crawler track by the bogie wheels of the bogie axles exceeds the friction and the said wheels begin to slip inside the track.

In tests made with the aid of a prototype, the crawler mat was able to maintain its load-bearing capacity in bog conditions, in which the ground was so boggy that moving on foot was difficult and a similar machine equipped with conventional bogies could not move forward at all.

Other embodiments and advantages of the invention are described hereinafter in connection with the description of the examples.

In the following, the invention is examined with the aid of examples and with reference to the accompanying drawings, in which
- Figure 1: shows one forestry machine, more specifically a loader tractor, according to the invention,
- Figure 2: shows the crawler-mat arrangement of the forestry machine of Figure 1, when the vehicle crosses a ditch,
- Figure 3: shows a top view of a second solution according to the invention in a forestry machine in greater detail, with the rear unit of the forestry machine partly dismantled,
- Figure 4: shows an angled bottom view of the rear unit of the forestry machine of Figure 3,
- Figure 5: shows rear view of the rear unit of the forestry machine of Figure 3,
- Figure 6: shows an exploded view of the rear unit of the forestry machine of Figure 3,
- Figure 7: shows a direct side view of the rear unit of the forestry machine of Figure 3.

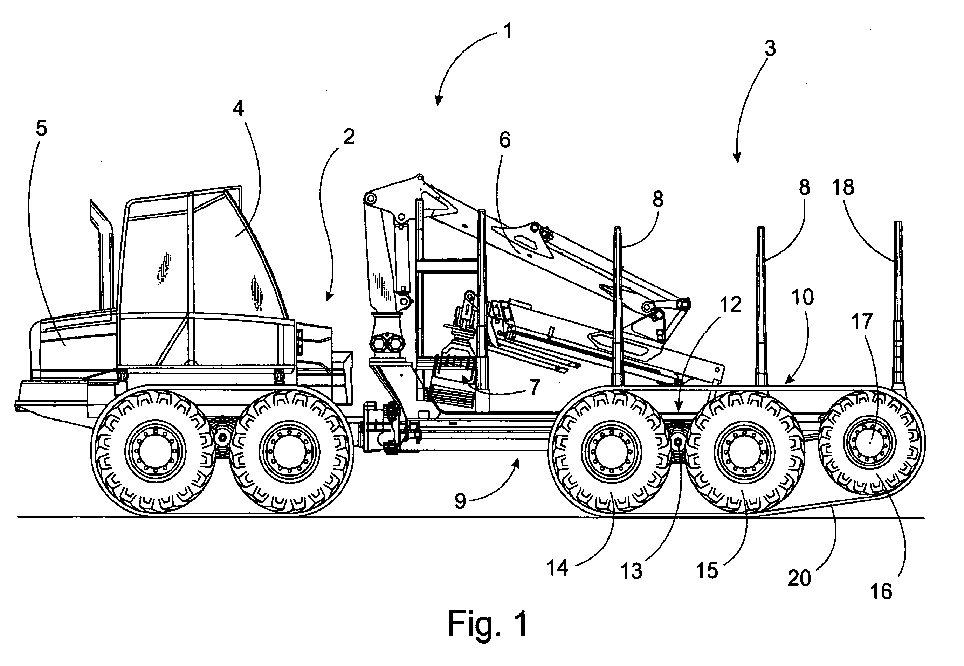

Figure 1 shows one basic solution of a forestry machine. In the forestry machine 1 there is a front unit 2 and a rear unit 3, which are connected to each other by a pivot. On the front unit 2 is the cab 4 of the forestry machine, from which the vehicle is steered and the power source 5 and work devices, in this case a loader 6 and a grab 7 attached to it, are controlled. The load space is defined by bunks 8, which include an additional bunk 18.

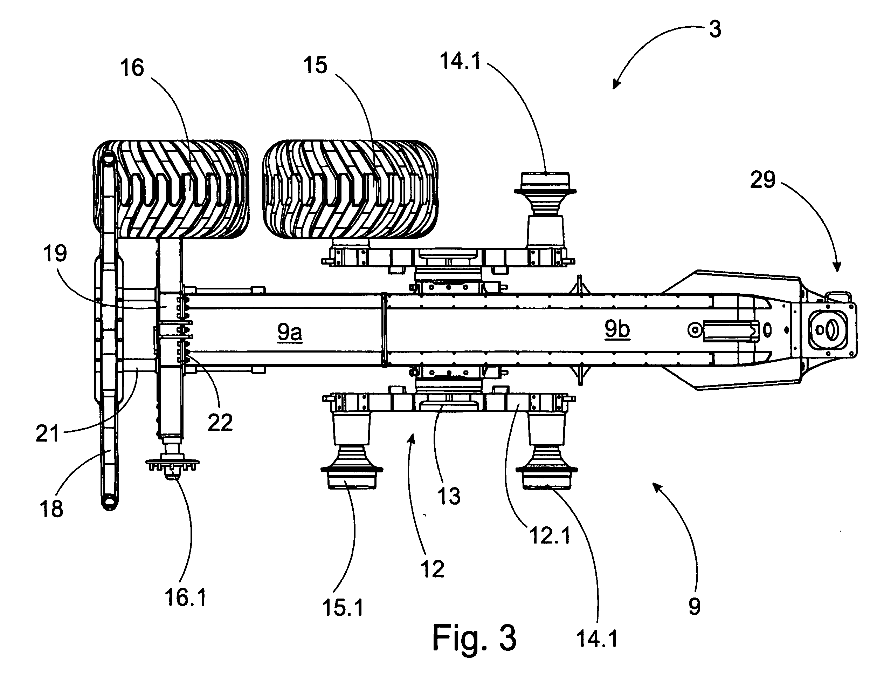

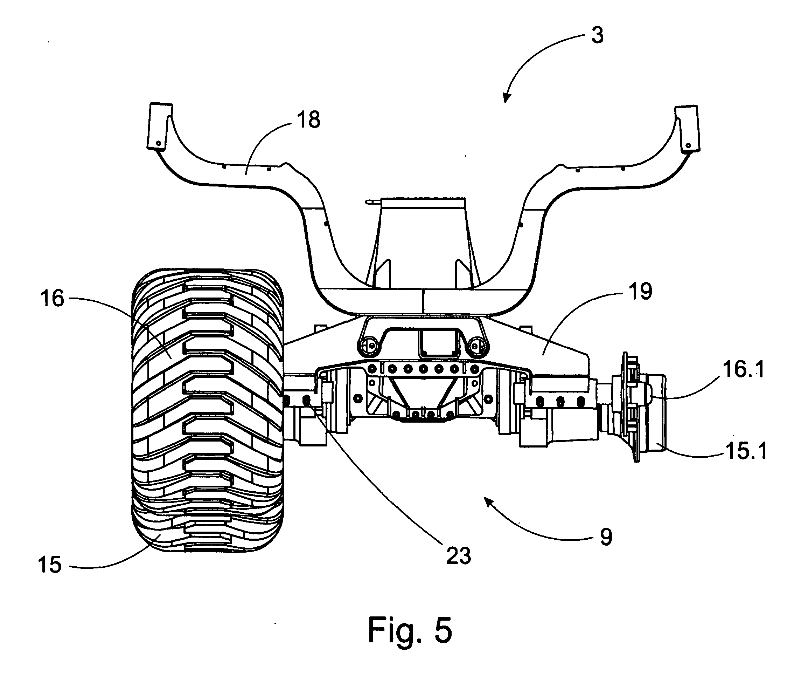

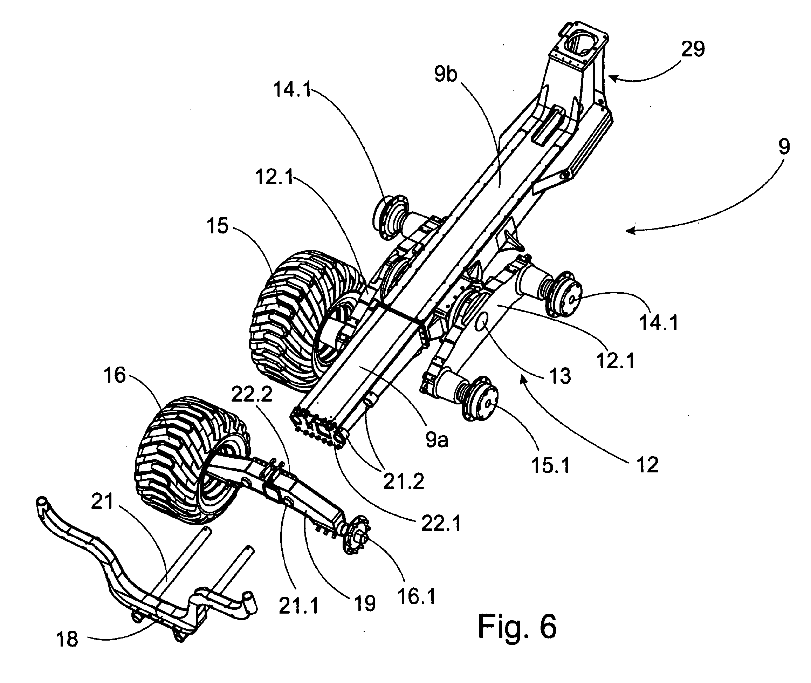

In terms of the present invention, it is essential that, in the forestry machine 1 there is a set of swing bogie axles 12, which can rotate around the upper axle 13 of the bogie axles 12. The set of swing bogie axles 12, more simply the bogie axles, is carried by the bogie wheels 14 and 15, which like conventional ones are powered. The rear part of the chassis 9 of the rear unit 3 includes an additional bunk in its own quick-release sub-chassis, which is pushed into muffs fitted to the sides of the chasses 9 of the rear unit (see also Figures 3 - 7). An auxiliary wheel 16, which preferably has a slightly smaller diameter than the bogie wheels 14 and 15, is attached to both sides of the same auxiliary beam 19. By means of a chassis of this kind, the upper surfaces of both the bogie wheels 14 and 15 and the auxiliary wheel 16 are thus at approximately the same height, so that the crawler mat 20 surrounding them lies essentially horizontally on top of them.

The chassis 9 of the rear unit 3 typically consists of two main parts 9a and 9b, which are attached to each other by means of a flange-type bolted joint 9c. In addition, under the chassis 9 a set of bogie axles 12, carrying the rear unit 3, is attached by means of a bolted joint. In the embodiment shown, the set of bogie axles 12 is thus precisely a set of swing bogie axles, in which the two bogie wheels 14 and 15 of the bogie axles 12 are supported on a bogie frame 12.1. In other words, the bogie frames 12.1 are located on both sides of the chassis and are arranged to rotate relative to the upper axle 13 of the set of bogie axles 12.

In this example, the pneumatic tyres of the bogie wheels 14 and 15 have a diameter of 1340 mm (pressure, for example, 4,5 bar) and the pneumatic tyre of the auxiliary wheel 16 has a diameter of 1171 mm (pressure, for example, 2 bar). The flexibility of the auxiliary wheel 16 is great enough for the bogie axles 12 to be able to rotate without difficulty from one extreme position to the other. In this case, the variation in the perimeter surrounding the wheel in the height position of the auxiliary wheel is so small, that the flexibility of the pneumatic tyre is sufficient to keep the crawler mat 20 suitably tensioned in all positions of the bogie axles. Thus, the full range of movement of the swing bogie can be exploited.

Generally, the pressure of the auxiliary wheel is reduced by 30 - 70 %, preferably 40 - 50 % of the pressure of the pneumatic tyres of the bogie wheels. At the same time, the size of the auxiliary wheel is generally 75 - 95 %, preferably 80 - 90 % of the size of a bogie wheel and the auxiliary wheel is installed off the ground by 10 - 25 %, preferably 13 - 17 %, of its diameter.

Because the front bogie wheel of the powered bogie axles tends to rise due to the torque of the bogie axles when the forestry machine is driven forwards, it is generally advantageous to place the auxiliary wheel behind the powered bogie wheels, so that when the rearmost bogie wheel of the bogie axles drops down, the auxiliary wheel and the additional part of the crawler mat begin to carry the weight. In addition, the rise of the front bogie wheel of the swing-bogie axles assist the bogie axles to rise up on soft ground. Another reason is often that the load often weighs so heavily on the rear, that the auxiliary wheel at the rear improves load-carrying in precisely the right place.

As such, the flexible auxiliary wheel can also be in front of the bogie wheels, or both in front of, and behind them.

The crawler-mat arrangement according to the invention can also be used in connection with the front unit. In other words, for example, a conventional eight-wheeled loader tractor, equipped with two sets of bogie axles, can quite well be equipped with two, or even four crawler-mat arrangements according to the invention, in which case an extremely low surface pressure will naturally be achieved.

The crawler-mat arrangement according to the invention can naturally also be fitted, using a corresponding principle, to a harvester machine and its set of bogie axles, instead of to a loader tractor.

Corresponding attachments for installing an auxiliary wheel can be fitted to the front unit of the machine.

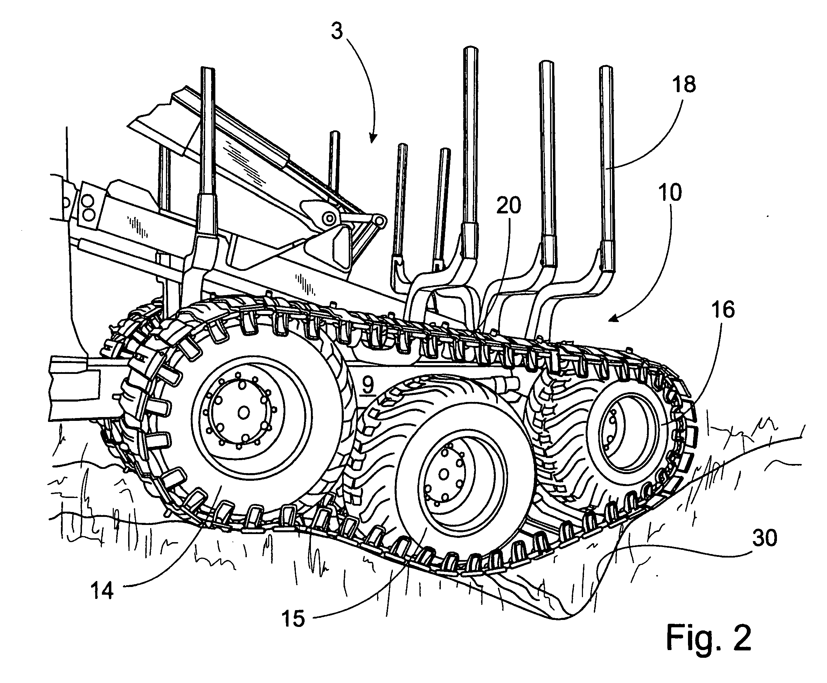

According to Figure 2, a forestry machine 1 equipped with a crawler mat 20 according to the invention can also easily cross various kinds of obstacle, in this case a ditch 30. The bogie wheels 14 and 15 are in the extreme position of the bogie axles and a long extension is achieved for the crawler mat 20 with the aid of the auxiliary wheel 16. However, it is obvious that it is not desirable to increase the total width of the forestry machine unnecessarily, because in thinning, for example, the driving track is often narrow and the trees remaining after thinning must not be damaged. This means that additional contact surface area should be sought in the longitudinal direction of the forestry machine. The fact that the additional wheel of the crawler-track arrangement according to the invention is located to the rear of the conventional swing-bogie axles does not substantially, if at all, increase the total length of the machine when loaded. The timber loaded conventionally on the load space of a loader tractor always protrudes to some extent behind the rearmost bunk.

On the other hand, in an 8-wheeled loader tractor, there may not necessarily be space for an additional wheel in front of the rear set of axles, without restricting the turning circle.

In addition to the auxiliary wheel's own flexibility, it is possible to use as such known suspensions or other crawler-mat tensioners in addition. In one embodiment, the air pressure of the auxiliary wheel can also be adjusted while the machine is moving and the wheel rotating.

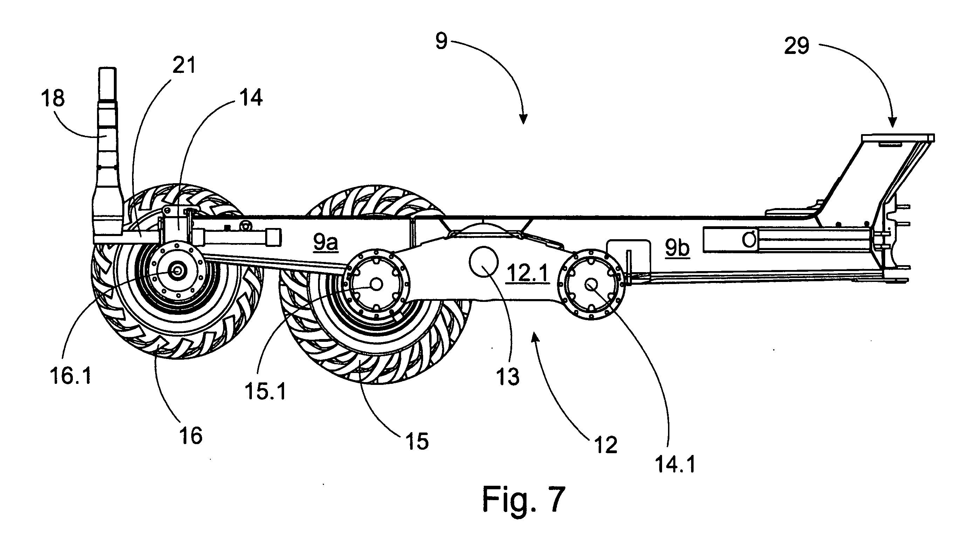

Figures 3 - 7 show a second embodiment of the invention. The rear unit is, in a known manner, attached to the front unit through a central pivot 29. The figures show in detail the rear unit 3 while the same reference numbers as above are used for components with a corresponding function. Some of the wheels are omitted for clarity, so that the other parts can be seen more clearly. The hubs of the bogie wheels 14, 15 are marked with the reference numbers 14.1 and 15.1. Figure 7 shows that the hub 16.1 of the auxiliary wheel 16 is on a higher line that those of the bogie wheels 14, 15, as in the version of Figures 1 and 2. In the version shown, the hub 16.1 of the auxiliary wheel 16 is nearly at the level of the upper axle 13 of the set of bogie axles 12.

In this version, the sub-chassis 19 carrying the auxiliary wheel 16 is attached to the rear end rearmost main part 9a of the chassis 9, by means of a flange attachment 22. The opposing flanges 22.1 and 22.2 can be seen in the exploded view 6, and are secured to each other, for example, by means of bolts. By means of this solution, it is quite simple to attach and detach the sub-chassis 19 together with the auxiliary wheels.

In this version, there is a flanged joint 22 between the chassis 9 and the sub-chassis 19. The pins of the additional bunk 18 are located to slide through the sub-chassis into sleeves in the chassis 9.

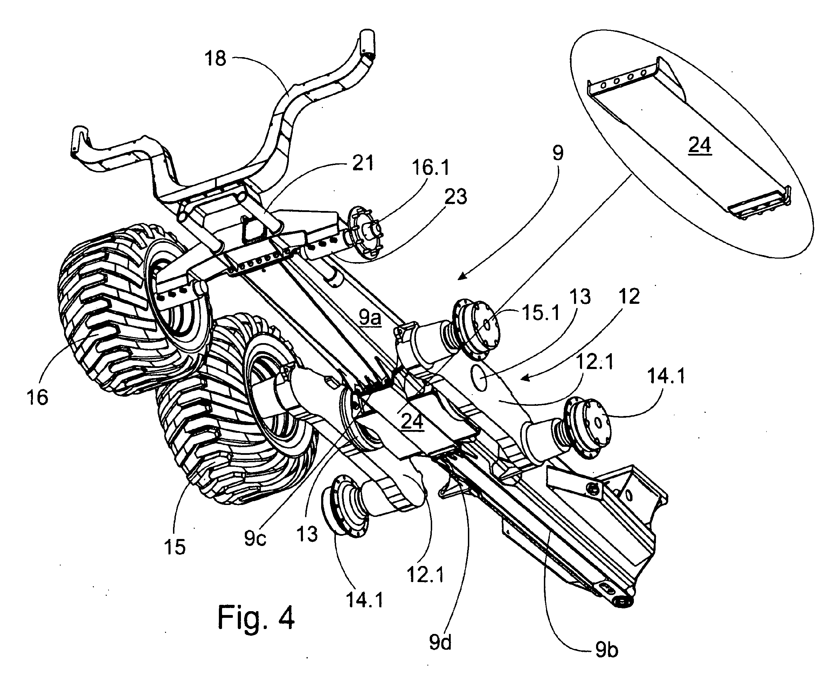

According to Figure 4, lateral movement means 23 can be fitted to the attachment of the auxiliary wheel 16, in order to adjust the track width. In this case, for example, three bolts are used to lock the fixed axle to the selected position in the muff of the sub-chassis. Instead of bolts, other attachment means can be used, or even a separate attachment mechanism (not shown). By making the track width adjustable, a single auxiliary-wheel accessory can be used to cover a large number of loader tractors of different sizes and models, thus achieving a greater degree of modularity.

Figure 4 shows a tension plate 24 fitted between the attachment flanges 9c and 9d. Generally, a tension plate, or some other structure transmitting tensile stress is located on the lower surface of the chassis 9, between the front end of the rear main part 9a of the chassis 9 and the front main part 9b of the chassis 9. The tension plate or other structure transmitting tensile stress can be separate, or it can be part of the rearmost main part 9a or the frontmost main part 9b. The use of such a tension plate or other structure transmitting tensile stress is advantageous and necessary, because a loading of this kind is not normally imposed on the rear unit of a loader tractor and the structure is thus not optimized for a loading in this direction. Depending on ground conditions, the use of an additional axles like that of the present invention may impose even large loadings on the chassis 9 of the rear unit 3.

These stresses will particularly tend to bend the main parts 9a and 9b of the chassis relative to each other. An attempt can be made to prevent this by placing a tension plate between the attachment flanges 9c and 9d. In practice, the axle of the auxiliary wheels receives the load and tends to bend the main parts 9a and 9b of the chassis 9 of the rear unit 3 relative to each other. More specifically, the rearmost main part 9a seeks to rotate upwards relative to the frontmost main part 9b. With the aid of a tension plate, the chassis of the rear unit can be reinforced to withstand the strains caused by the use of an auxiliary wheel. The application of auxiliary wheels according to the invention in different kinds of loader tractors is possible without extensive alteration work. The thickness of the tension plate is preferably 8 - 20 mm, so that it is able to withstand a sufficiently large tensile strain, without, however, reducing the ground clearance of the machine unnecessarily. Figure 4 also shows an enlarged picture of a detached tension plate 24. The structure of the rear unit shown in the figures is stiffened simply by means of the tension plate shown. The chassis of the rear unit can also be manufactured in an different way. In that case, according to the invention, the chassis is, however, reinforced in such a way that it will withstand a situation, in which only the auxiliary wheels carry the load. In other words, the chassis is reinforced in such a way that only the auxiliary wheels are load-bearing. In the situation in question, the weights of the rear unit and the load are supported only on the central pivot between the front and rear units and on the auxiliary wheels. This situation can appear, for example, when crossing a ditch, or on steep slopes.

## Claims

1. Arrangement in a forestry machine (1), in which there are front and rear units (2, 3) and bogie wheels (14, 15) with pneumatic tyres, mounted on a set of swing bogie axles (12) having a range of movement, as well as a crawler mat (20) running around the bogie wheels (14, 15) and an auxiliary wheel (16) outside the set of swing axles (12), **characterized in that** the auxiliary wheel (16) is essentially pe anently mounted in bearings in the front and/or rear un' (2, 3), so that, when the set of swing axles (12) turns, e tension of the crawler mat (20) is maintained by means o flexible elements connected to its perimeter, and **in that** the auxiliary wheel (16) has another pneumatic tyre with reduced pressure compared to the pressure of pneumatic tyres of the bogie wheels (14, 15), forming the said flexible elements and allowing the said range of movement of the swing bogie axles (12).

2. Arrangement according to Claim 1, **characterized in that** the reduced pressure of the auxiliary wheel (16) is 30 - 70 %, preferably 40 - 50 %, of the pressure of the pneumatic tyres of the bogie wheels (14, 15).

3. Arrangement according to Claim 1 or 2, **characterized in that** the auxiliary wheel (16) is attached detachably.

4. Arrangement according to Claim 3, **characterized in that** the auxiliary wheel (16) is supported on frame of an additional bunk (18) belonging to the forestry machine (1).

5. Arrangement according to Claim 3, **characterized in that** the auxiliary wheel (16) is supported on its own sub-chassis (19), which is attached to the end of the chassis (9) by means of a flange joint.

6. Arrangement according to any of Claims 1 - 5, **characterized in that** the size of the auxiliary wheel (16) is 75 - 95 %, preferably 80 - 90 % of the size of a bogie wheel (14, 15).

7. Arrangement according to any of Claims 1 - 6, **characterized in that** the auxiliary wheel (16) is installed to be free of the ground by 10 - 25 %, preferably 13 - 17 % of its diameter.

8. Arrangement according to any of Claims 1 - 7, **characterized in that** the air pressure of the auxiliary wheel (16) is arranged to be adjustable when the machine is moving and the auxiliary wheel (16) is rotating.

9. Arrangement according to any of Claims 1 - 8, in connection with a set of power swing axles (12) carrying the load space, **characterized in that** the auxiliary wheel (16) is placed behind the powered set of swing bogie axles (12).

10. Arrangement according to any of Claims 1 - 9, **characterized in that** lateral transfer means (23) are connected to the attachment of the auxiliary wheel (16), in order to adjust the track width.

11. Arrangement according to any of Claims 1 - 10, **characterized in that** the chassis (9) of the rear unit (3) is formed of two main parts (9a, 9b), between which a tension plate (24), or some other structure transmitting tensile strain is arranged on the side of the chassis (9) opposite to the load space.

12. Arrangement according to Claim 11, **characterized in that** the tension plate (24) is attached to attachment flanges (9c, 9d) arranged in the main parts (9a, 9b).

13. Forestry machine (1), which includes a front unit (2) and a rear unit (3), in one of which is the cab (4), attached to each other by a pivot, as well as at least one set of swing-bogie axles (12) with bogie wheels (14, 15), as well as an auxiliary wheel (16) separate from the set of swing-bogie axles (12), and a crawler mat (20) placed around the bogie wheels (14, 15) and the auxiliary wheel (16), **characterized in that** the forestry machine (1) includes an arrangement according to any of Claims 1 - 12.

## Patentansprüche

1. Anordnung in einer Forstmaschine (1), die einen Vorderwagen und einen Hinterwagen (2, 3) und an einem Pendelachsaggregat (12) mit Bewegungsbereich befestigte Laufräder (14, 15) mit Gummiluftbereifung sowie ein diese Räder und ein außerhalb des Pendelachsaggregats (12) befindliches Hilfsrad (16) umhüllendes Bogieband (20) umfasst, **dadurch gekennzeichnet, dass** das Hilfsrad (16) im Wesentlichen fest an dem Vorder- und/oder Hinterwagen (2, 3) gelagert ist, wobei beim Drehen des Pendelachsaggregats (12) die Spannung des Bogiebandes (20) durch an seinem Umfang angeordnete flexible Elemente aufrechterhalten wird, und dadurch, dass das Hilfsrad (16) Gummiluftbereifung mit einem im Vergleich zur Gummiluftbereifung der Laufräder (14, 15) niedrigeren Druck hat und so die besagten flexiblen Elemente bildet und dem Laufradachsaggregat (12) somit Bewegungsraum lässt.

2. Anordnung nach Anspruch 1, **dadurch gekennzeichnet, dass** der reduzierte Druck des Hilfsrades (16) 30 - 70 %, am bevorzugtesten 40 - 50 % des Druckes der Gummiluftbereifung der Laufräder (14, 15) beträgt.

3. Anordnung nach Anspruch 1 oder 2, **dadurch gekennzeichnet, dass** das Hilfsrad (16) abnehmbar befestigt ist.

4. Anordnung nach Anspruch 3, **dadurch gekennzeichnet, dass** das Hilfsrad (16) am Rahmen einer zu der Forstmaschine (1) gehörenden zusätzlichen Rungenbank (18) aufgehängt ist.

5. Anordnung nach Anspruch 3, **dadurch gekennzeichnet, dass** das Hilfsrad (16) an einem eigenen Hilfsrahmen (19) aufgehängt ist, der über eine Flanschverbindung ans Ende des Rahmens (9) gefügt ist.

6. Anordnung nach irgendeinem der Ansprüche 1 bis 5, **dadurch gekennzeichnet, dass** die Größe des Hilfsrades (16) 75 - 95 %, am bevorzugtesten 80 - 90 % der Größe der Laufräder (14, 15) beträgt.

7. Anordnung nach irgendeinem der Ansprüche 1 bis 6, **dadurch gekennzeichnet, dass** das Hilfsrad (16) in einem Bodenabstand von 10 - 25 %, am bevorzugtesten von 13 - 17 % seines Durchmessers angeordnet ist.

8. Anordnung nach irgendeinem der Ansprüche 1 bis 7, **dadurch gekennzeichnet, dass** der Luftdruck des Hilfsrades (16) bei fahrender Maschine und rotierendem Hilfsrad (16) regulierbar ist.

9. Anordnung nach irgendeinem der Ansprüche 1 bis 8 in Verbindung mit dem den Laderaum tragenden, angetriebenen Pendelachsaggregat (12), **dadurch gekennzeichnet, dass** das Hilfsrad (16) hinter dem angetriebenen Pendelachsaggregat (12) angeordnet ist.

10. Anordnung nach irgendeinem der Ansprüche 1 bis 9, **dadurch gekennzeichnet, dass** mit der Befestigung des Hilfsrades (16) Seitenverstellmittel (23) zum Einstellen der Spurbreite verbunden sind.

11. Anordnung nach irgendeinem der Ansprüche 1 bis 10, **dadurch gekennzeichnet, dass** der Rahmen (9) des Hinterwagens (3) aus zwei Hauptteilen (9a, 9b) besteht, zwischen denen auf der zum Laderaum entgegengesetzten Seite des Rahmens (9) eine Zugplatte (24) oder eine andere die Zugspannung übertragende Konstruktion angeordnet ist.

12. Anordnung nach Anspruch 11, **dadurch gekennzeichnet, dass** die Zugplatte (24) an Befestigungsflanschen (9c, 9d), die an den Hauptteilen (9a, 9b) angeordnet sind, befestigt ist.

13. Forstmaschine (1), die einen Vorderwagen (2) und einen Hinterwagen (3), die aneinander angelenkt sind, wobei der eine dieser Wagen die Kabine (4) bildet, und wenigstens ein Pendelachsaggregat (12) einschließlich Laufrädern (14, 15) und ein diese Laufräder und ein von dem Pendelachsaggregat (12) getrenntes Hilfsrad (16) umhüllendes Bogieband (20) umfasst, **dadurch gekennzeichnet, dass** zu der Forstmaschine (1) eine Anordnung nach irgendeinem der Ansprüche 1 bis 12 gehört.

## Revendications

1. Arrangement dans un engin forestier (1), dans lequel il y a des unités avant et arrière (2, 3) et des roues de bogie (14, 15) avec des pneumatiques installées sur un ensemble d'essieux moteurs oscillants (12) ayant une amplitude de mouvement, ainsi qu'une chenille (20) tournant autour des roues de bogie (14, 15) et d'une roue auxiliaire (16) séparée de l'ensemble d'essieux oscillants (12), **caractérisé en ce que** la roue auxiliaire (16) est attachée essentiellement de manière permanente par paliers à l'unité avant et/ou arrière (2, 3), de sorte que, lorsque l'ensemble d'essieux oscillants (12) tourne, la tension de la chenille (20) est maintenue à l'aide d'éléments flexibles liés à son périmètre, et **en ce que** la roue auxiliaire (16) a un autre pneumatique ayant une pression réduite par rapport à la pression des pneumatiques des roues de bogie (14, 15) formant lesdits éléments flexibles et permettant ladite amplitude de mouvement de l'ensemble d'essieux oscillants (12).

2. Arrangement selon la revendication 1, **caractérisé en ce que** la pression réduite de la roue auxiliaire (16) est de 30 à 70 %, de préférence de 40 à 50 % de la pression des pneumatiques des roues de bogie (14, 15).

3. Arrangement selon la revendication 1 ou 2, **caractérisé en ce que** la roue auxiliaire (16) est attachée de manière amovible.

4. Arrangement selon la revendication 3, **caractérisé en ce que** la roue auxiliaire (16) prend appui sur le cadre d'un berceau supplémentaire (18) appartenant à l'engin forestier (1).

5. Arrangement selon la revendication 3, **caractérisé en ce que** la roue auxiliaire (16) prend appui sur son propre châssis auxiliaire (19), qui est attaché à l'extrémité du châssis (9) par un joint à bride.

6. Arrangement selon l'une quelconque des revendications 1 à 5, **caractérisé en ce que** la taille de la roue auxiliaire (16) est de 75 à 95 %, de préférence de 80 à 90 % de la taille d'une roue de bogie (14, 15).

7. Arrangement selon l'une quelconque des revendications 1 à 6, **caractérisé en ce que** la roue auxiliaire (16) est installée au dessus du sol à une distance correspondant à 10 à 25 %, de préférence 13 à 17 % de son diamètre.

8. Arrangement selon l'une quelconque des revendications 1 à 7, **caractérisé en ce que** la pression d'air de la roue auxiliaire (16) est disposée à être ajustable pendant que l'engin bouge et la roue auxiliaire (16) tourne.

9. Arrangement selon l'une quelconque des revendications 1 à 8, en liaison avec un ensemble d'essieux moteurs oscillants (12) portant l'espace à cargaison, **caractérisé en ce que** la roue auxiliaire (16) est placée derrière l'ensemble d'essieux moteurs oscillants (12).

10. Arrangement selon l'une quelconque des revendications 1 à 9, **caractérisé en ce que** des moyens de transfert latéral (23) sont liés à la fixation de la roue auxiliaire (16) pour ajuster la voie.

11. Arrangement selon l'une quelconque des revendications 1 à 10, **caractérisé en ce que** le châssis (9) de l'unité arrière (3) se compose de deux parties principales (9a, 9b), entre lesquelles une plaque de tension (24) ou une autre structure transmettant la contrainte de traction est disposée sur le côté du châssis (9) opposé à l'espace à cargaison.

12. Arrangement selon la revendication 11, **caractérisé en ce que** la plaque de tension (24) est attachée aux brides de fixation (9c, 9d) disposées dans les parties principales (9a, 9b).

13. Engin forestier (1), qui comprend une unité avant (2) et une unité arrière (3), reliées ensemble par pivot, dans l'une desquelles se trouve la cabine (4), et au moins un ensemble d'essieux oscillants (12) avec ses roues de bogie (14, 15), ainsi qu'une roue auxiliaire (16) séparée de l'ensemble d'essieux oscillants (12), et une chenille (20) placée autour des roues de bogie (14, 15) et de la roue auxiliaire (16), **caractérisé en ce que** l'engin forestier (1) comprend un arrangement selon l'une quelconque des revendications 1 à 12.
